# EUROPEAN PATENT APPLICATION

(11) **EP 2 230 498 A2**
(43) Date of publication of application: **22.09.2010**
(21) Application number: 10156378.1
(22) Date of filing: 12.03.2010
(51) Int. Cl.: G01K 1/08, G01K 1/14

(54) **Methods and apparatus involving heat detectors**

(30) Priority: 17.03.2009 US 405648
(71) Applicant: General Electric Company, Schenectady, NY 12345 (US)
(72) Inventor: Gilchrist, III, George Martin, Greenville, SC 29605 (US); Costa, Albert Bernard, Simpsonville, SC 29681 (US); Holder, Benjamin Lynn, Chappells, SC 29037 (US)
(74) Representative: Gray, Thomas

(57) **Abstract**

A heat detector (100) comprising a housing member (102), a first hermetic connector portion (104) connected to the housing member (102), a sensor member (302) disposed in the housing member (102) operative to detect a temperature, and a first contact portion (202) disposed in the first hermetic connector portion (104), wherein the first contact portion (202) is connected to the sensor member (302).

## Description

### BACKGROUND OF THE INVENTION

The subject matter disclosed herein relates to heat detectors and particularly to heat detector connectors.

Heat detectors may be used in a variety of applications including, for example, engine enclosures, industrial spaces, and high value locations and are often used to detect fires. When a heat detector is serviced or replaced, a technician often disconnects and reconnects wires from connection terminals on the heat detector. The connection terminals on the heat detector are difficult and time consuming to manipulate. An improved heat detector is desired.

### BRIEF DESCRIPTION OF THE INVENTION

According to one aspect of the invention, a heat detector comprising, a housing member, a first hermetic connector portion connected to the housing member, a sensor member disposed in the housing member operative to detect a temperature, and a first contact portion disposed in the first hermetic connector portion, wherein the contact portion is connected to the sensor member.

According to another aspect of the invention, a method of fabricating a heat detector comprising, fabricating a housing member, disposing a sensor member in the housing member operative to detect a temperature, connecting a first hermetic connector portion to the housing member, and connecting a first contact portion in the first hermetic connector portion to the sensor member.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a front view of an exemplary embodiment of a heat detector.

FIG. 2 is a side view along the line 2-2 of the heat detector of FIG. 1.

FIG. 3 is a partially cutaway front view of the heat detector along the line 3-3 of FIG. 2.

FIG. 4 is a front view of an alternate exemplary embodiment of a heat detector.

The detailed description explains embodiments of the invention, together with advantages and features, by way of example with reference to the drawings.

### DETAILED DESCRIPTION OF THE INVENTION

Heat detectors are used in a number of industrial applications, to detect fires, trigger alarms and control the release of extinguishing agents. Installation and servicing heat detectors is difficult and time consuming in many applications since access to the electrical connectors may be limited.

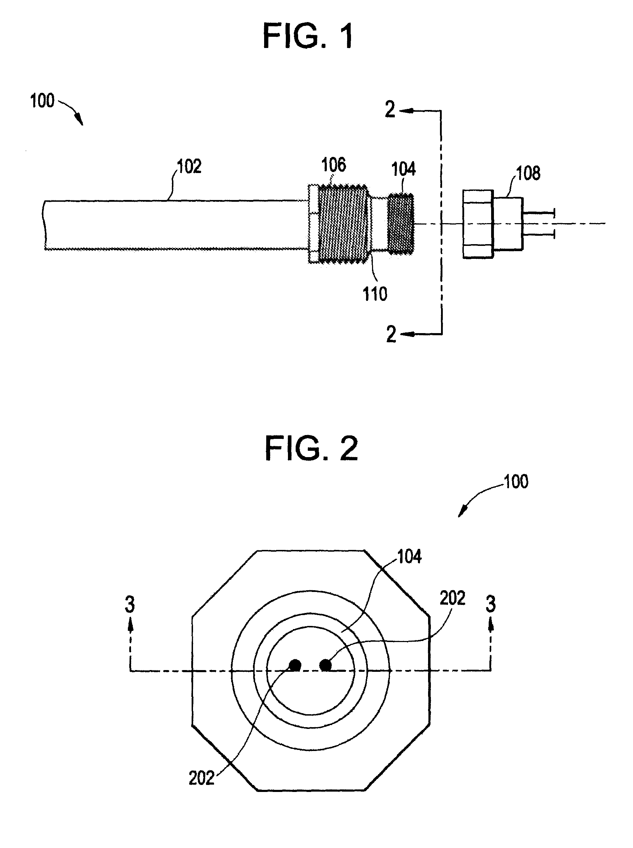

FIG. 1 illustrates a front view of an exemplary embodiment of a heat detector 100. The heat detector 100 includes housing member 102, a connector portion 104, and a line connector portion 108. The heat detector 100 may include a mount portion 106. In operation, the mount portion 106 may be used to mount the heat detector 100 in a desired location.

FIG. 2 illustrates a side view of the heat detector 100 along the line 2-2 (of FIG. 1). FIG. 2 includes contacts 202 disposed in the connector portion 104.

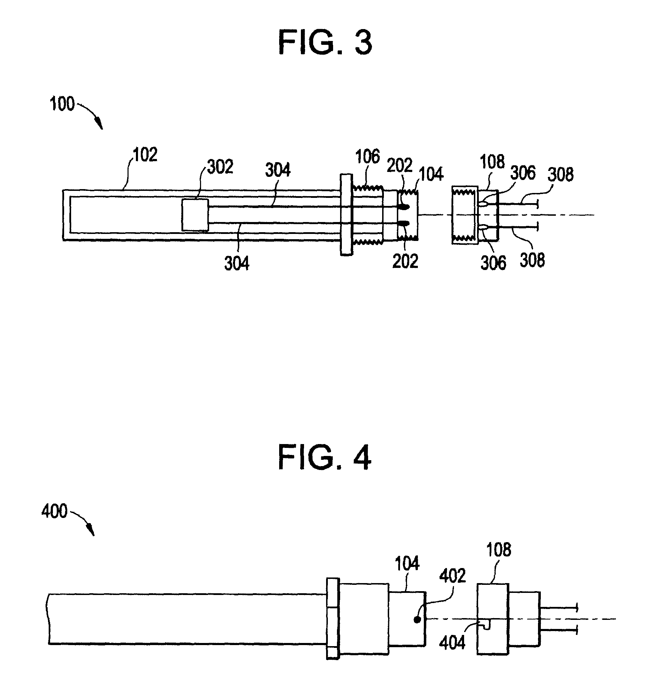

FIG. 3 illustrates a partially cut away front view of the heat detector 100 along the line 3-3 (of FIG. 2). FIG. 3 includes a sensor member 302 disposed in the housing member 102. The sensor member 302 may be hermetically sealed inside the housing member 102. The sensor member 302 is connected to the contacts 202 with conductors 304. The conductors 304 may include a number of types of conductive materials including, for example, copper wire or other similar materials. The housing member 102 may be formed from number of materials such as, for example stainless steel, steel, or other alloys.

In an example of operation, when, for example, a fire or other event heats the housing member 102, the sensor member 302 closes internal contacts (not shown) that complete a circuit that includes the conductors 304 and the contacts 202. The contacts 202 are electrically connected to a sensing circuit (not shown) that detects the closed circuit and may direct an appropriate action, such as, for example sending an alarm signal and triggering an extinguishing system.

Referring to FIG. 3, the illustrated embodiment includes a connector portion 104 having male threads. A line connector portion 108 is shown that includes female threads and female contacts 306 and conductors 308. The line connector portion 108 mechanically engages the connector portion 104, hermetically sealing the contacts 202 and 306. The contacts 202 engage the contacts 306 making an electrical connection. Alternate embodiments may include a connector portion 104 having female threads and a line connector portion 108 having male threads. The contacts 202 may be female, while the corresponding contacts 306 are male. The embodiments are not limited to two contacts 202 and 306, but may include any number of contacts and corresponding conductors according to the specifications of the heat detector 100 and systems including the heat detector 100.

FIG. 4 illustrates a front view of an alternate embodiment of the heat detector 400. The heat detector 400 includes a connector portion 104 having pins 402 that engage slots 404 in the line connector portion 108 securing a mechanical connection between the connector portion 104 and the line connector portion 108.

The connector portion 104 may be attached to the housing member 102 with a weld, a braze, fasteners such as, for example, machine screws, a crimp, or a press fit in the shaded region 110 (of FIG. 1). Alternatively, the housing member 102 may include a threaded connector portion 104 that is fabricated by, for example, a machining a blank material to form both the housing member 102 and the connector portion 104.

The use of the connector portion 104 allows the line connector portion 108 to be easily attached and unattached without using tools. The use of the illustrated connectors decreases the labor costs of using tools to connect the heat detector 100 to a monitoring system.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Aspects of the present invention are defined in the following numbered clauses:
1. A heat detector comprising:
   a housing member;
   a first hermetic connector portion connected to the housing member;
   a sensor member disposed in the housing member operative to detect a temperature; and
   a first contact portion disposed in the first hermetic connector portion, wherein the first contact portion is connected to the sensor member.
2. The heat detector of clause 1, wherein the heat detector further comprises a second connector portion having a second contact portion operative to engage the first hermetic connector portion.
3. The heat detector of clause 1 or clause 2, wherein the first hermetic connector portion includes a threaded portion.
4. The heat detector of clause 2, wherein the second connector portion includes a threaded portion.
5. The heat detector of any one of the preceding clauses, wherein the first hermetic connector portion includes a pin operative to engage a slot.
6. The heat detector of clause 2, wherein the second connector portion includes a slot operative to engage a pin of the first hermetic connector portion.
7. The heat detector of clause 2, wherein the second contact portion is electrically connected to wire conductors.
8. The heat detector of any one of the preceding clauses, wherein the housing member is operative to maintain a hermetic seal.
9. The heat detector of any one of the preceding clauses, wherein the heat detector further includes a weld operative to connect the first hermetic connector portion to the housing member.
10. The heat detector of any one of the preceding clauses, wherein the heat detector further includes a braze operative to connect the first hermetic connector portion to the housing member.
11. The heat detector of any one of the preceding clauses, wherein the heat detector further includes a fastener operative to connect the first hermetic connector portion to the housing member.
12. The heat detector of any one of the preceding clauses, wherein the heat detector further includes a press fitting operative to connect the first hermetic connector portion to the housing member.
13. A method of fabricating a heat detector comprising:
   fabricating a housing member;
   disposing a sensor member in the housing member operative to detect a temperature;
   connecting a first hermetic connector portion to the housing member; and
   connecting a first contact portion in the first hermetic connector portion to the sensor member.
14. The method of clause 13, wherein the first hermetic connector portion is connected to the housing member with a weld.
15. The method of clause 13 or clause 14, wherein the first hermetic connector portion is connected to the housing member with a braze.
16. The method of any one of clauses 13 to 15, wherein the first hermetic connector portion is connected to the housing member with a press fit.
17. The method of any one of clauses 13 to 16, wherein the first hermetic connector portion is connected to the housing member with a fastener.
18. The method of any one of clauses 13 to 17, wherein the first hermetic connector portion is connected to the housing member with a crimp.

## Claims

1. A heat detector (100) comprising:
a housing member (102);
a first hermetic connector portion (104) connected to the housing member (102);
a sensor member (302) disposed in the housing member (102) operative to detect a temperature; and
a first contact portion (202) disposed in the first hermetic connector portion (104), wherein the first contact portion (202) is connected to the sensor member (302).

2. The heat detector of claim 1, wherein the heat detector (100) further comprises a second connector portion (108) having a second contact portion (202) operative to engage the first hermetic connector portion (104).

3. The heat detector of claim 1 or claim 2, wherein the first hermetic connector (104) portion includes a threaded portion.

4. The heat detector of claim 2, wherein the second connector portion (108) includes a threaded portion.

5. The heat detector of any one of the preceding claims, wherein the first hermetic connector portion (104) includes a pin (402) operative to engage a slot (404).

6. The heat detector of claim 2, wherein the second connector pontion(108) includes a slot (404) operative to engage a pin (402) of the first hermetic connector portion (104).

7. The heat detector of claim 2, wherein the second contact portion (202) is electrically connected to wire conductors (308).

8. The heat detector of any one of the preceding claims, wherein the housing member (102) is operative to maintain a hermetic seal.

9. The heat detector of any one of the preceding claims, wherein the heat detector further includes a weld operative to connect the first hermetic connector portion (104) to the housing member (102).

10. The heat detector of any one of the preceding claims, wherein the heat detector further includes a braze operative to connect the first hermetic connector portion (104) to the housing member (102).

11. A method of fabricating a heat detector comprising:
fabricating a housing member;
disposing a sensor member in the housing member operative to detect a temperature;
connecting a first hermetic connector portion to the housing member; and
connecting a first contact portion in the first hermetic connector portion to the sensor member.

12. The method of claim 11 wherein the first hermetic connector portion is connected to the housing member with a weld.

13. The method of claim 11 or claim 12, wherein the first hermetic connector portion is connected to the housing member with a braze.

14. The method of any one of claims 11 to 13, wherein the first hermetic connector portion is connected to the housing member with a press fit.

15. The method of any one of claims 11 to 14, wherein the first hermetic connector portion is connected to the housing member with a fastener.
